# EUROPEAN PATENT APPLICATION

(11) **EP 2 402 857 A1**
(43) Date of publication of application: **04.01.2012**
(21) Application number: 11170897.0
(22) Date of filing: 22.06.2011
(51) Int. Cl.: G06F 9/445

(54) **Method and system for software update of wind energy hardware components**

(30) Priority: 29.06.2010 US 825496
(71) Applicant: General Electric Company, Schenectady, NY 12345 (US)
(72) Inventor: Middendorf, Joerg, 49451 Holdorf (DE); SCHOLTE-WASSINK, Hartmut, 49828 Lage (DE)
(74) Representative: Bedford, Grant Richard

(57) **Abstract**

A method for installing software data at at least one hardware component (114) of a wind energy device is provided. The at least one hardware component (114) is adapted to operate on the basis of the software data. The method includes providing the software data, detecting a network parameter (402) indicating an operational condition of a network, determining, on the basis of the network parameter (402), whether the network is in an appropriate network download condition, if the network is in an appropriate network download condition, downloading of the software data from a download server (400) to a data center (200), detecting an operation parameter (406) indicating an operational condition of the at least one hardware component (114), determining, on the basis of the operation parameter (406), whether the at least one hardware component (114) is ready for software installation, and if the at least one hardware component (114) is ready for software installation, installing the software data from the data center (200) at the at least one hardware component (114).

## Description

The present disclosure generally relates to wind turbines which may be arranged within a wind farm, and in particular relates to a system for software update of wind energy hardware components such as a wind turbine controller. Furthermore, the present disclosure relates to a method for exchanging data between a server unit and the wind turbine.

Wind turbines are of increasing importance with respect to reliable and environmentally safe energy sources. Typically, a wind turbine includes mechanical components, electrical and electronic components and software components. At specific maintenance intervals, mechanical components may be exchanged if they are used, damaged or have to be repaired. Furthermore, electrical and electronic components may be exchanged in accordance with operational states of the wind turbine.

Typically, a wind turbine is controlled by means of control data which are provided externally. These control data may be transferred to the wind turbine such that a desired function within the wind turbine may be performed. Whereas mechanical, electronic and electrical components are exchanged in long intervals, control data may change in short time intervals.

In order to provide a wind turbine with new control data or new software data, old control data or old software data are overwritten by the new control data and the new software data, respectively. An installation of software data at a hardware component may include an overwriting of old software data by new software data, or a complete replacement of a software package at a hardware component. During a transfer of new data from an external unit to the wind turbine, during overwriting of new data onto old data etc., the wind turbine operation may be interrupted. Such kind of interruption of a wind turbine operation may decrease the energy production of a specific wind turbine within a wind farm. The energy production is typically measured in units of AEP, i.e. an annual energy production. An updating of control and/or software data provided within a wind turbine may take place at different moments in time.

In many cases, this kind of data transfer may take place at a moment in time when the workload of the wind turbine is high. Environmental conditions of the wind turbine, site conditions of the wind turbine at a wind farm where the wind turbine is located, an electrical grid condition and/or an operational state of the wind turbine are issues when an appropriate moment of time for updating control and/or software data is chosen.

In view of the above, a method for installing software data at at least one hardware component of a wind energy device is provided herein, the hardware component being adapted to operate on the basis of the software data, the method including providing the software data detecting a network parameter indicating an operational condition of a network used for a software download; determining, on the basis of the network parameter, whether the network is in an appropriate network download condition; if the network is in an appropriate network download condition, downloading of the software data from a download server to a data center; detecting an operation parameter indicating an operational condition of the at least one hardware component; determining, on the basis of the operation parameter, whether the hardware component is ready for software installation; and if the hardware component is ready for software installation, installing the software data from the data center at the hardware component.

According to a further embodiment, a computer program adapted for carrying out a method for installing software data at at least one hardware component adapted to operate on the basis of the software data is provided, the computer program including an input for the software data a network parameter detector, the network parameter indicating an operational condition of a network used for a software download; a network determinator for determining, on the basis of the network parameter, whether the network is in an appropriate network download condition, wherein, if the network is in an appropriate network download condition, the software data are downloaded from a download server to a data center; an operation parameter detector, the operation parameter indicating an operational condition of the at least one hardware component; and an operation determinator for determining, on the basis of the operation parameter, whether the hardware component is ready for software installation, wherein, if the hardware component is ready for software installation, the software data are installed from the data center at the hardware component.

According to yet a further embodiment, a system adapted for installing software data at at least one hardware component of a wind energy device is provided, the system including a download server; a network parameter detection unit adapted for detecting a network parameter indicative of an operational condition of a network used for a software download from the download server; an operation parameter detection unit adapted for detecting an operation parameter indicative of an operational condition of the at least one hardware component; and a determination unit operatively connected to the operation parameter detection unit and adapted for determining, on the basis of the detected operation parameter, an appropriate moment in time for installing the software at the hardware component.

Various aspects, advantages and features of the present invention are apparent from the dependent claims, the description and the accompanying drawings, in which:
Fig. 1 is a schematic block diagram showing a data center connected to a software download server and different hardware components, according to a typical embodiment;
Fig. 2 is a flowchart illustrating a method for downloading software data from a software download server and for installing the software data at a hardware component, according to a typical embodiment;
Fig. 3 is a flowchart illustrating a method for downloading software data from a software download server and for installing the software data at a plurality of hardware components, according to another typical embodiment;
Fig. 4 shows a side view of a wind turbine for schematically illustrating basic components included in a wind turbine, according to a typical embodiment;
Fig. 5 illustrates a control scheme for a wind turbine having a wind turbine controller which is connected to a data center including a central control unit and a central server unit;
Fig. 6 details a wind turbine controller connected between a wind turbine to be controlled and a data center, according to a typical embodiment; and
Fig. 7 is a schematic illustration of a wind farm including a number of wind turbines respectively connected to a data center by means of respective wind turbine controllers, according to another typical embodiment.

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

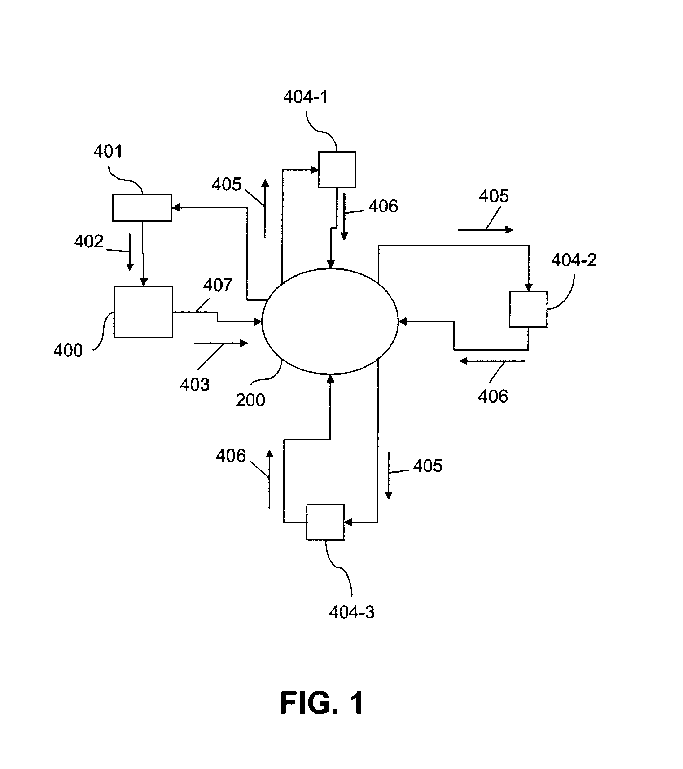

Fig. 1 is a schematic block diagram showing a data center 200 connected to a software download server 400 and a number of hardware components 404-1, 404-2, 404-3, according to a typical embodiment. Albeit three hardware components 404-1, 404-2, 404-3 are shown in Fig. 1, it is noted here that only one hardware component, two hardware components, and more than two hardware components may be connected to the data center 200. Such kind of hardware components 404 may be units of a wind energy device device such as wind turbine controllers, a wind farm management system (WFMS), or any other hardware-based unit connected to the data center and capable of receiving software data. It is noted here that a wind turbine controller described herein is only exemplary for a software-operated hardware component.or any other hardware-based unit connected to the data center and capable of receiving software data.

A network parameter detection unit 401 determines a network parameter 402 for the software download server 400. This network parameter 402 indicates an operational condition of a network 407 used for a software download 403 from the software download server 400 to the data center 200. Furthermore, the data center 200 is connected to the network parameter detection unit 401 which enable a detection of an operational condition of an internal grid arranged within a wind farm.

In accordance with the determined network parameter 402 a download starting time and or a download duration may be determined. E.g. if heavy network traffic is present, it may be decided to postpone a download starting time. Instead, it may be decided to download the software data at once and to accept a longer download duration. In addition to that, it may be decided to download the software data in data packages at different download starting times and/or at different download durations.

It is noted here that the term "time" used with respect to a software download may relate to, but is not restricted to, a date such as day/month/year, hours/minutes/seconds, a specific moment in time, and a signal provided by a clock.

If an appropriate network download condition is detected, a software download 403 from the software download server 400 to the data center 200 is performed. Then an operation parameter 406 indicating an operational condition of a respective hardware component 404 where the software data may be installed, is determined for each hardware component 404. If the operation parameter indicates that the hardware component is ready for installation of software data, a software installation 405 is performed at the respective hardware component 404.

In accordance with the determined operation parameter 406 an installation starting time and or an installation duration for a software installation from the data center 200 to a specific hardware component 404-1, ... 404-3 may be determined. E.g. if the respective hardware component is not in a condition appropriate for software installation, it may be decided to postpone an installation starting time. Instead, it may be decided to install the software data at once and to accept a longer installation duration. In addition to that, it may be decided to install the software in data packages at different installation starting times and at different installation durations.

An appropriate condition for software installation may depend on at least one operation parameter of the respective hardware component 404. The operation parameter may be determined on the basis on environmental conditions of the hardware component, on site conditions, on grid conditions and/or on an operational state of the hardware component such that an efficient software installation from the data center 200 to the hardware component 404 can be provided.

It is noted here that the term "time" used with respect to a software installation at a respective hardware component may relate to, but is not restricted to, a date such as day/month/year, hours/minutes/seconds, a specific moment in time, and a signal provided by a clock.

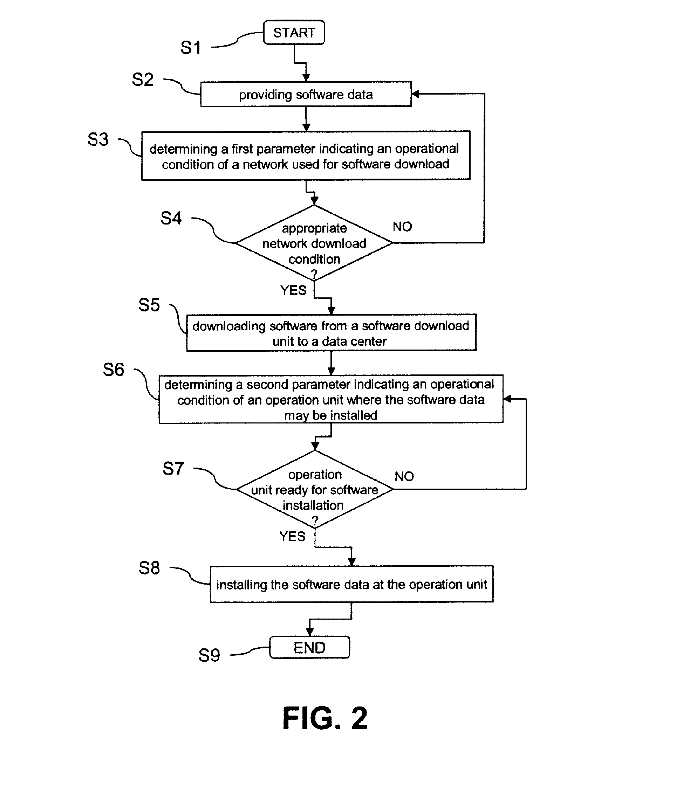

Fig. 2 is a flowchart illustrating a method for downloading software data from a software download server 400 and for installing the software data at a hardware component 404, according to a typical embodiment. The method includes the steps S 1 to S9. In a step S1, the procedure is started. Then the procedure advances to a step S2 where software data are provided.

At a succeeding step S3 a network parameter indicating an operational condition of the network 407 (see Fig. 1) used for software download is detected. The network parameter is selected from the group consisting of a network load, a grid stability, a date, a moment in time, a time duration for software download, and any combination thereof. At a following step S4 it is determined whether the network is in an appropriate network download condition. If it is determined in step S4, that the network 407 is in an appropriate network download condition, the software data are downloaded to the data center 200 in a step S5. At the data center 200 it is determined, whether new software data have been downloaded. This determination may be performed by a comparison of currently available software data with the downloaded software data. If it is determined in step S4, that the network 407 is not in an appropriate network download condition, the procedure returns to step S2.

Then, in a step S6, an operation parameter indicating an operational condition of a hardware component 404 where the software data may be installed, is detected. The operation parameter may be detected at the location of the wind turbine and is selected from the group consisting of workload of the hardware component, environmental condition at the hardware component, grid stability, operational state of wind turbine, a condition of the site of the wind turbine (site condition), a condition of an electrical grid to which the wind turbine is connected (grid condition), an operational state of the wind turbine, and any combination thereof. The detected environmental condition is selected from the group consisting of a wind velocity, a wind direction, an ambient temperature, a humidity level, and any combination thereof. The operational state of the wind turbine is selected from the group consisting of a defect-downtime, a low energy operation, a repair period, a maintenance interval, an inspection period, and any combination thereof. Furthermore, the site condition may include a wind shadow at a wind turbine which is arranged within a wind farm. Moreover, the grid condition may include at least a grid stability and/or a grid load. At a following step S7 it is determined whether the hardware component 404 is ready for a software installation. If it is determined in step S7, that the hardware component 404 is not ready for a software installation, the procedure returns to the step S6.

If it is determined in step S7 that the hardware component 404 is ready for a software installation, the procedure advances to a step S8 where the software data are installed at the hardware component 404. In a following step S9, after software installation, the procedure is ended.

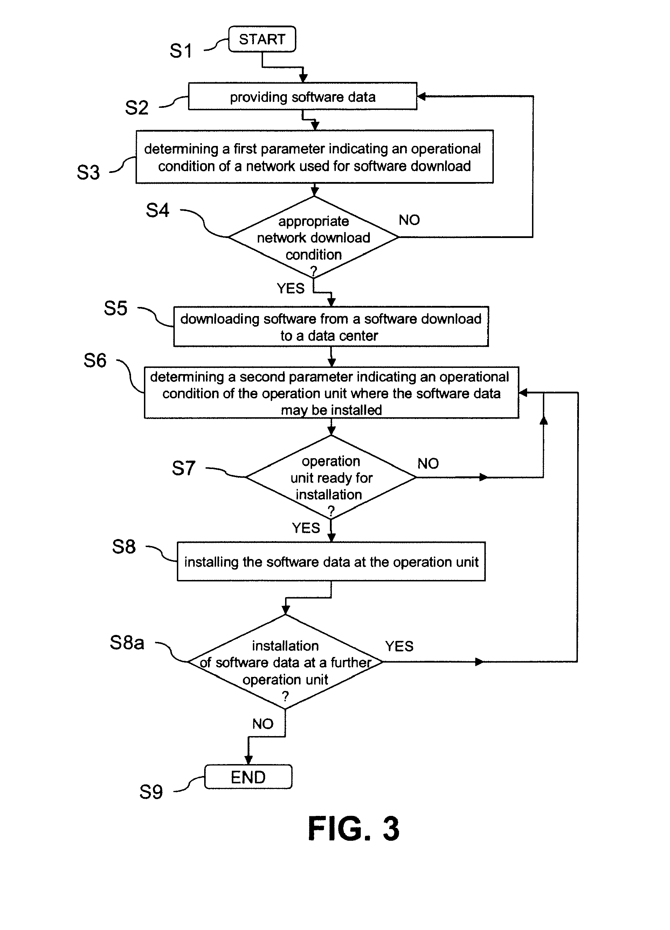

Fig. 3 is a flowchart illustrating a method for downloading software data from a software download server and for installing the software data at at least one hardware component, according to another typical embodiment.

The method includes the steps S1 to S9. In a step S1, the procedure is started. Then the procedure advances to a step S2 where software data are provided. At a succeeding step S3 a network parameter indicating an operational condition of the network 407 used for software download is detected. At a following step S4 it is determined whether the network is in an appropriate network download condition or not.

If it is determined in step S4, that the network 407 is in an appropriate network download condition, the software data are downloaded to the data center 200 in a step S5. If it is determined in step S4, that the network 407 is not in an appropriate network download condition, the procedure returns to step S2.

Then, in a step S6, an operation parameter is detected which indicates an operational condition of a hardware component 404 which may be one of a plurality of hardware components 404-1, 404-2, 404-3, ..., (see Fig. 1), and where the software data may be installed. At a following step S7 it is determined whether the hardware component 404 is ready for a software installation or not. If it is determined in step S7, that the hardware component 404 is not ready for a software installation, the procedure returns to the step S6.

If it is determined in step S7, that the hardware component 404 is ready for a software installation, the procedure advances to a step S8 where the software data are installed at the respective hardware component 404 of the plurality of hardware components 404-1, 404-2, 404-3, ....

In a following step S8a it is determined whether the software data should be installed at a further hardware component of the plurality of hardware components. If it is determined in step S8a, that at least one further hardware component 404 should be provided with the software data, the procedure returns to step S6, where another operation parameter is detected which indicates an operational condition of the at least one further hardware component 404 where the software data may be installed.

If it is determined in step S8a, that no more hardware components 404 shall be provided with the software data, the procedure advances to a step S9 where the software installation procedure is ended.

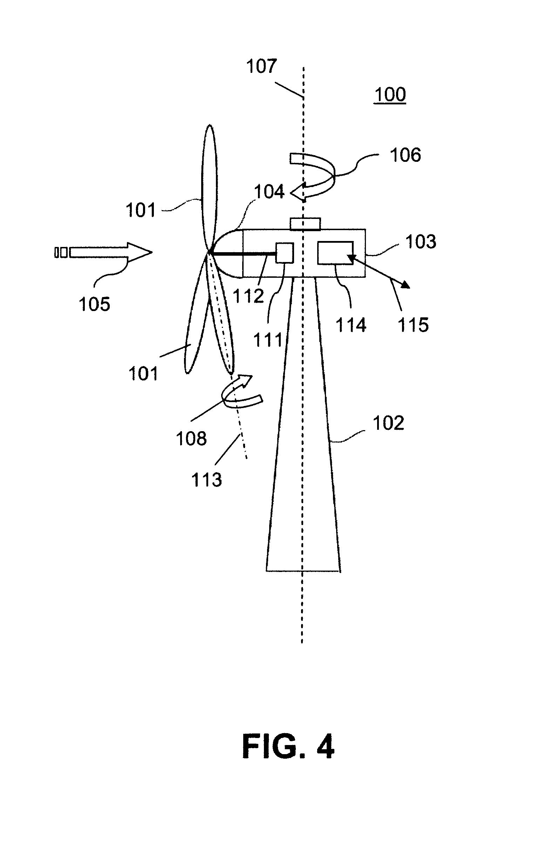

Fig. 4 is a schematic side view of a wind turbine 100 illustrating typical components for explaining the principles of the present invention. The wind turbine 100 includes a tower 102 having a vertical tower axis 107. A machine nacelle 103 is arranged rotatably atop the wind turbine tower 102 such that a drive train of the wind turbine 100 may be directed towards the incoming wind direction 105. The drive train of the wind turbine typically includes a rotor having a hub 104, a main shaft 112 and an electrical generator 111. The rotor furthermore includes at least one rotor blade 101 having a rotor blade longitudinal axis 113.

A pitch angle of the rotor blade 101 may be adjusted by turning the rotor blade 101 about the rotor blade longitudinal axis 113, as shown by means of an arrow 108. The pitch angle 108 which is adjusted by means of pitch motors is adapted to a speed of incoming wind 105.

According to a typical embodiment, the wind turbine 100 includes a hardware component which may be provided as a wind turbine controller 114 adapted for controlling an operational state of the wind turbine. Furthermore, the wind turbine controller 114 is used for providing a data exchange link 115 to an external control unit, which will be described herein below. It is noted here that the wind turbine controller 114 described herein is only exemplary for a software-operated hardware component or any other hardware-based unit connected to the data center and capable of receiving software data.

The data which are exchanged by the data exchange link 115 may include, but are not restricted to, control data, software data, data updates, operation parameters, etc. The operation parameters may be detected at the location of the wind turbine and are selected from the group consisting of a detected environmental condition at the wind turbine 100, a condition of the site of the wind turbine (site condition), a condition of an electrical grid to which the wind turbine 100 is connected (grid condition), an operational state of the wind turbine 100, and any combination thereof.

The detected environmental condition is selected from the group consisting of a wind velocity, a wind direction, an ambient temperature, a humidity level, and any combination thereof. The operational state of the wind turbine is selected from the group consisting of a defect-downtime, a low energy operation, a repair period, a maintenance interval, an inspection period, and any combination thereof.. Furthermore, the site condition may include a wind shadow at a wind turbine which is arranged within a wind farm. Moreover, the grid condition may include at least a grid stability and/or a grid load.

At a moment in time, when data are exchanged by means of a data exchange operation, the wind turbine 100 is not operated. A data exchange method includes, at an individual wind turbine, the following steps which are performed while transferring the data (control data, software data, operation parameters, etc.) from an external server unit to the wind turbine controller 114. At first the wind turbine is shut down, e.g. by closing a brake of the rotor of the wind turbine, or by opening a clutch. Then software data are installed, and finally the wind turbine may be restarted.

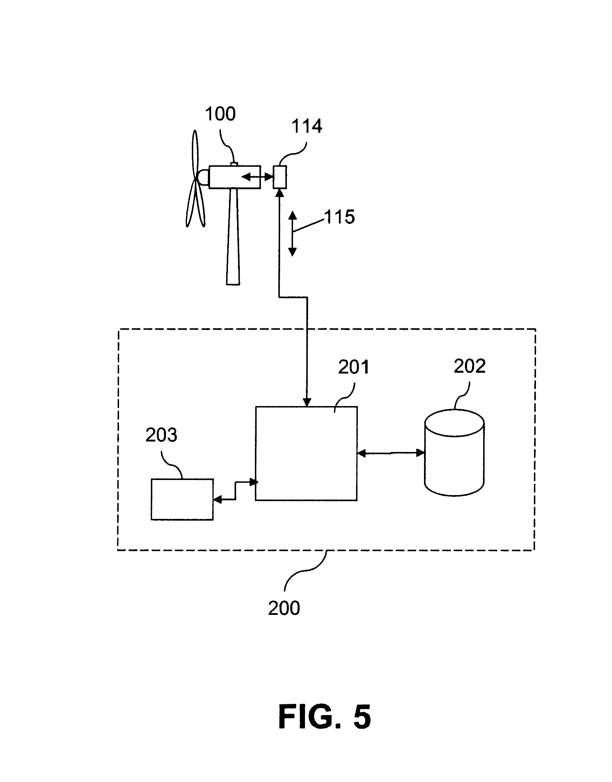

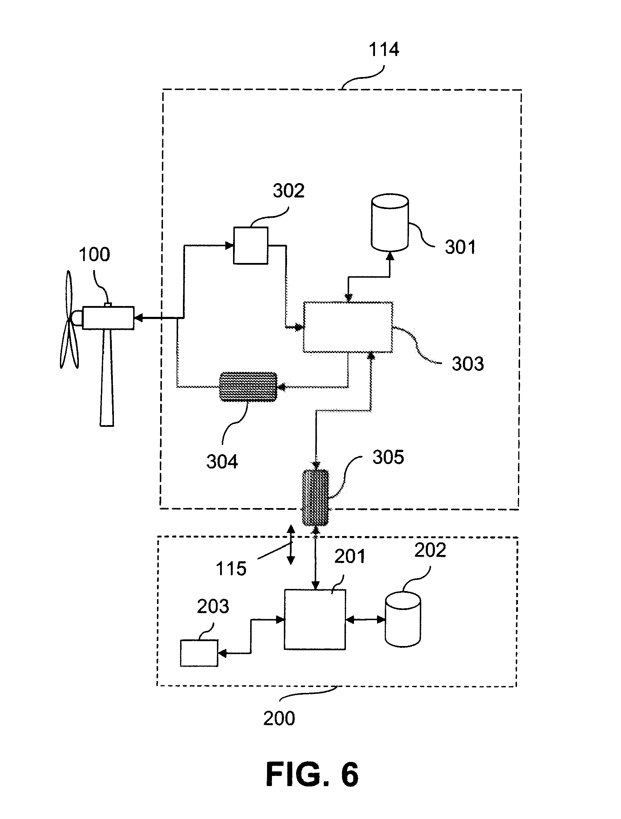

Fig. 5 is a schematic diagram for illustrating a data exchange link 115 between a wind turbine 100 and a data center 200 via a wind turbine controller 114, according to a typical embodiment. An individual wind turbine 100 includes at least one wind turbine controller 114 which will be described in more detail with respect to Fig. 6 herein below. The data center 200 includes a central control unit 201, a central server unit 202 and an operator terminal 203. The central control unit 201 is connected to the central server unit 202 such that control data, software data, etc. which are provided within the central server unit 202 can be transferred via the central control unit 201 to the wind turbine controller 114.

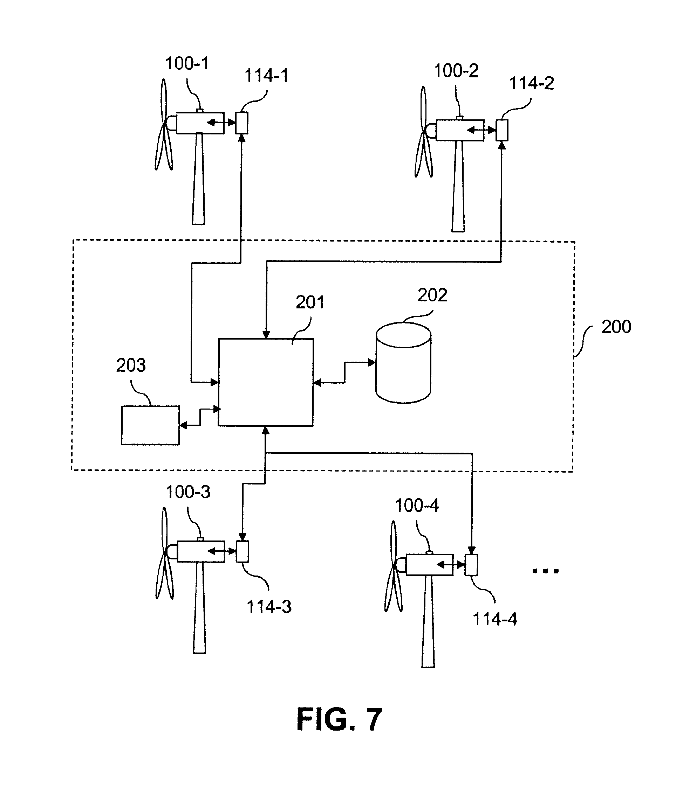

Furthermore, it is possible that an operator manually controls a data exchange link 115 by means of the operator terminal 202 which is also connected to the central control unit 201. Different kinds of software data and control data may be exchanged via the data exchange link 115. A supervisory control and data acquisition (SCADA) may be used for monitoring, controlling and data acquisition of an individual wind turbine 100. SCADA software is related to central systems which may monitor an entire wind farm (see Fig. 7) and its installation. A communication technology may be a TCP-based internet communication.

If an update of software data fails, this information may be provided by the wind turbine controller 114, too. The conditions and moments in time, when such a software update is performed, will be described herein below with respect to Figs. 3, 4 and 5. Moreover, the update may be forced manually by an operator who provides inputs into the operator terminal 203. The central control unit 201 may be provided as a workstation, a PC, and any other unit which is adapted for transferring and processing software data. The central server unit 201 is the main unit for exchanging data 115 with the wind turbine controller 114 of the wind turbine 100.

Data which are provided by the wind turbine 100 are selected from the group consisting of a defect-downtime, a low energy operational state, a repair period, a maintenance interval, an inspection period, and any combination thereof. The data which are transferred from the central control unit 201 to an individual wind turbine 100 via the wind turbine controller 114 may include data which are used for updating at least one software package of the wind turbine.

Furthermore, it is possible to provide automated software updates in dependence of a workload of an individual wind turbine 100. An automated software update may be independent from the state of other wind turbines or may be provided on the basis of an operational state of other wind turbines within a wind turbine farm.

Fig. 6 is a block diagram illustrating a data exchange between an individual wind turbine 100 and the data center 200 in more detail. Fig. 6 illustrates components of the wind turbine controller 114. The wind turbine controller 114 includes a data input unit 305 for inputting data 115 to be exchanged between the individual wind turbine 100 and the central control unit 201 of the data center 200.

The wind turbine controller 114 furthermore includes an operation parameter detection unit 302 adapted for detecting at least one operation parameter of the wind turbine 100.

The at least one detected operation parameter is selected from the group consisting of a detected environmental condition at the wind turbine 100, a site condition, a grid condition of an electrical grid, an operational state of the wind turbine, and any combination thereof. The detected operation parameter is transferred to a determination unit 303 which is adapted for determining, on the basis of the detected operation parameter, when and/or under which condition a data exchange link 115 between the wind turbine 100 and the data center 200 can be performed.

The data exchange is performed via the data input unit 305. Furthermore, the wind turbine controller 114 includes a data output unit 304 where data, which have been received from the data center 200, are output from the determination unit 303 to the wind turbine 100. A memory unit 301 is connected to the determination unit wherein the memory unit is adapted for storing previous operation parameters. By storing previous operation parameters, a history of values of operation parameters may be provided in order to find an appropriate moment in time for a software update or an exchange of control data between the data center 200 and the wind turbine 100.

The determination unit 303 is adapted for determining a moment in time which is appropriate for exchanging data. The determination may be based on at least one of a detected environmental condition at the wind turbine, wherein the detected environmental condition is selected from the group consisting of a wind velocity, a wind direction, an ambient temperature, a humidity level, and any combination thereof.

For example, if the wind velocity is measured, a low wind velocity lasting for a specified period may indicate that an appropriate moment of time for switching off the individual wind turbine 100 and for updating software data has been reached. As the determination 308 unit is operatively connected to the operation parameter detection unit 302, an appropriate moment in time for transferring data from the central server unit to the wind turbine may be efficiently provided.

Furthermore, a feedback of the status of the wind turbine 100 may be transferred from the wind turbine controller 114 to the data center 200. If more than one individual wind turbine 100 is connected to the data center 200 (see also Fig. 7), an operational state of more than one wind turbine 100, i.e. other wind turbines 100-1, 100-2, ... 100-n (n being the number of wind turbines) which are connected to the data center 200, may be taken into account when software data are transferred from the data center 200 to an individual wind turbine 100. Moreover, other conditions such as network load, wind speed and grid stability may be taken into account.

As mentioned above, an automated software update in dependence on external conditions like grid conditions, weather conditions (wind speed, wind direction, air temperature), site conditions like wind shadow occurring at a specific wind turbine 100 may be provided. The moment in time of such kind of software updating is determined by the determination unit 303 of the wind turbine controller 114.

In this way, an efficient operation of an individual wind turbine 100 or, if two or more wind turbines are connected to a data center 200, an efficient operation of at least two wind turbines 100-1, 100-2 may be provided. This kind of efficient operation is based on a reduction of AEP losses (AEP, Annual Energy Production). The updating of software data may be made on the basis of a grid condition which may include a grid stability and/or a grid load of an electrical grid to which the individual wind turbine 100 is connected. The central control unit 201 of the data center 200 may indicate an availability of updated software versions or operating system versions which may be provided for the individual wind turbine 100.

Further information which may be provided by the central control unit 201 is a priority of the update, i.e. an indication when a software update may be made at the latest. Using the determination unit 303 of the wind turbine controller 114, it is now possible to define a time slot for performing the update such that AEP losses are reduced. Using the procedure described above, the wind turbine controller 114 of an individual wind turbine 100 may perform automated software updates by selecting the individual wind turbine 100-1, 100-2, ... 100-n (n being the number of wind turbines) using the determination unit 303.

The software is provided by the data center 200 or from an external source which can be a server or another wind turbine 100 (see Fig. 7). An automated software update may result in a complete or a partial update procedure being performed by the individual wind turbine 100 itself. An information may be provided for the operator about an updating status whether the update is available, whether the update has failed and/or whether the update has been performed successfully.

Fig. 7 is a schematic illustration of a wind farm including a plurality of wind turbines 100-1, 100-2, 100-3, 100-4, ... The individual wind turbines 100-1, ..., 100-4 each include an individual wind turbine controller 114-1, 114-2, 114-3, 114-4, ..., respectively. Via the individual wind turbine controllers 114-1, ..., 114-4, the wind turbines 100-1, ..., 100-4 are connected to the data center 200. A software download can be provided from an external source, i.e. the central server unit 202, or from an individual wind turbine 100-1,..., 100-4 being connected to the data center 200 itself. Thus data (control data, software data, etc.) may be exchanged between individual wind turbines arranged within a wind farm. The individual wind turbine 100 may provide information for an operator about a current status (update available, updating, update failed, update done).

It is noted here, albeit only four wind turbines are shown in Fig. 7 to form a wind farm, typically up to 200 wind turbines 100 are arranged and connected to a common data center 200. This common data center 200 may be provided as a part of a wind farm management system which may be used to manage a number of wind turbines arranged within a wind farm. Individual software updates of wind turbines arranged within a wind farm can be made at different moments in time depending on individual operation parameters of individual wind turbines 100 at specified times. Thus, a limited number of wind turbines 100 may perform a software updating in order to avoid an undesired waste of wind energy. In addition to that, or instead of, updating software data at individual wind turbines, it is possible to update software data of the wind farm management system itself. Furthermore it is possible to update software data of the data center which may be part of the wind farm management system.

In case of an arrangement as shown in Fig. 7, where several wind turbines 100-1, ..., 100-4 are arranged within a wind farm, the site condition may include a wind shadow at a wind turbine within the wind farm. The wind turbine 100 which is in a wind shadow with respect to another wind turbine 100 may efficiently update software without too large a reduction of the overall AEP of the wind farm. Furthermore, a software update of an individual wind turbine 100 may be determined on the basis of at least one operational state of another wind turbine within the wind farm.

A time slot (moment in time) for a software update may be determined on the basis of at least one operational state of at least one second wind turbine arranged within the wind farm. A detection of an operational state of wind turbines 100 arranged within the wind farm may result in a specific software updating wherein the updating is carried out for a specified number of wind turbines at the same time resulting in a reduction of a network load. Wind turbines may provide information on currently installed software versions in order to provide and/or to maintain a database (software version overview). Furthermore, a time schedule may be provided for updating software data of all or of a part of the wind turbines 100-1, ..., 100-4 arranged within the wind farm.

According to the method for downloading software data from a software download server and for installing the software data at a hardware component, costs and service time for updating data for an individual hardware component 404 or a wind turbine controller, respectively are reduced. Furthermore, AEP losses are reduced, because an appropriate moment in time may be chosen for updating the individual wind turbine software.

The network and operation parameters may depend on environmental conditions of the wind turbine, site conditions, grid conditions and an operational state of the wind turbine such that an efficient software and data transfer between the data center 200 and the wind turbine 100 can be provided.

The larger the number of wind turbines 100 arranged within a wind farm is, the larger the time reduction for installing software updates transfer is.

This written description uses examples to disclose the invention, including the preferred mode, and also to enable any person skilled in the art to practice the described subject-matter, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope is defmed by the claims, and may include such modifications and other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defmed by the following numbered clauses:
1. A method for installing software data at at least one hardware component of a device, the at least one hardware component being adapted to operate on the basis of the software data, the method comprising:
   providing the software data;
   detecting a network parameter indicating an operational condition of a network used for a software download;
   determining, on the basis of the network parameter, whether the network is in an appropriate network download condition;
   if the network is in an appropriate network download condition, downloading of the software data from a download server to a data center;
   detecting an operation parameter indicating an operational condition of the at least one hardware component;
   determining, on the basis of the operation parameter, whether the at least one hardware component is ready for software installation; and
   if the at least one hardware component is ready for software installation, installing the software data from the data center at the at least one hardware component.
2. The method in accordance with clause 1, wherein the network parameter is selected from the group consisting of a network load, a grid stability, a date, a moment in time, a time duration for software download, and any combination thereof.
3. The method in accordance with any preceding clause, wherein the device comprises a wind energy device and wherein the operation parameter is selected from the group consisting of workload of the at least one hardware component, environmental condition at the at least one hardware component, grid stability, operational state of the wind energy device, and any combination thereof.
4. The method in accordance with any preceding clause, wherein the device comprises a wind energy device and wherein the at least one hardware component is provided as a controller of a wind turbine, and wherein, at an individual wind turbine, the following steps are performed with respect to an installation the software data from the central server unit to the wind turbine controller:
   shutting down the wind turbine;
   installing the software data; and
   restarting the wind turbine.
5. The method in accordance with any preceding clause, wherein the software download and the software installation are automatically performed.
6. The method in accordance with any preceding clause, wherein the device comprises a wind energy device and wherein a time slot for an installation of the software data is determined on the basis of a condition selected from the group consisting of a detected environmental condition at a wind turbine, a site condition, a grid condition, an operational state of a wind turbine, and any combination thereof.
7. The method in accordance with any preceding clause, wherein the detected environmental condition is selected from the group consisting of a wind velocity, a wind direction, an ambient temperature, a humidity level, and any combination thereof.
8. The method in accordance with any preceding clause, wherein the operational state of the wind turbine is selected from the group consisting of a defect-downtime, a low energy operation, a repair period, a maintenance interval, an inspection period, and any combination thereof.
9. The method in accordance with any preceding clause, wherein the grid condition comprises a grid stability and/or a grid load.
10. The method in accordance with any preceding clause, wherein a time slot for an installation of the software data is determined on the basis of a condition selected from the group consisting of a detected environmental condition at at least one second wind turbine arranged within a wind farm, a site condition, a grid condition, an operational state of at least one second wind turbine arranged within the wind farm, and any combination thereof.
11. A computer program adapted for carrying out a method for installing software data at at least one hardware component adapted to operate on the basis of the software data, the computer program comprising:
   an input for the software data;
   a network parameter detector providing a network parameter, the network parameter indicating an operational condition of a network used for a software download;
   a network determinator for determining, on the basis of the network parameter, whether the network is in an appropriate network download condition, wherein, if the network is in an appropriate network download condition, the software data are downloaded from a download server to a data center;
   an operation parameter detector providing an operation parameter, the operation parameter indicating an operational condition of the at least one hardware component;
      and
   an operation determinator for determining, on the basis of the operation parameter, whether the at least one hardware component is ready for software installation, wherein, if the at least one hardware component is ready for software installation, the software data are installed from the data center at the at least one hardware component.
12. The computer program in accordance with any preceding clause, wherein the network parameter is selected from the group consisting of a network load, a grid stability, a date, a moment in time, a time duration for software download, and any combination thereof.
13. The computer program in accordance with any preceding clause, wherein the operation parameter is selected from the group consisting of workload of the at least one hardware component, environmental condition at the at least one hardware component, grid stability, and any combination thereof.
14. A system adapted for installing software data at at least one hardware component of a device, the system comprising:
   a download server;
   a network parameter detection unit adapted for detecting a network parameter indicative of an operational condition of a network used for a software download from the download server;
   an operation parameter detection unit adapted for detecting at least one operation parameter indicative of an operational condition of the at least one hardware component; and
   a determination unit operatively connected to the operation parameter detection unit and adapted for determining, on the basis of the detected operation parameter, an appropriate time slot for installing the software at the at least one hardware component.
15. The system in accordance with any preceding clause, wherein the device is a wind energy device and wherein the at least one detected operation parameter is selected from the group consisting of a detected environmental condition at the wind energy device, a site condition, a grid condition, an operational state, and any combination thereof.
16. The system in accordance with any preceding clause, wherein a time slot for a software update is determined on the basis of at least one operational state of at least one of at least two wind turbines.
17. The system in accordance with any preceding clause, wherein the at least one detected operation parameter is selected from the group consisting of a detected environmental condition at at least one of the at least two wind turbines, a site condition, a grid condition, an operational state of at least one of the at least two wind turbines, and any combination thereof.
18. The system in accordance with any preceding clause, wherein the detected environmental condition is selected from the group consisting of a wind velocity, a wind direction, an ambient temperature, a humidity level at at least one of the at least two wind turbines, and any combination thereof.
19. The system in accordance with any preceding clause, wherein the operation parameter is obtained from at least one of at least two wind turbines, and wherein the operation parameter is selected from the group consisting of a defect-downtime, a low energy operation, a repair period, a maintenance interval, an inspection period, and any combination thereof.

## Claims

1. A method for installing software data at at least one hardware component (114) of a device, the at least one hardware component (114) being adapted to operate on the basis of the software data, the method comprising:
providing the software data;
detecting a network parameter (402) indicating an operational condition of a network used for a software download;
determining, on the basis of the network parameter (402), whether the network is in an appropriate network download condition;
if the network is in an appropriate network download condition, downloading of the software data from a download server (400) to a data center (200);
detecting an operation parameter (406) indicating an operational condition of the at least one hardware component (114);
determining, on the basis of the operation parameter (406), whether the at least one hardware component (114) is ready for software installation; and
if the at least one hardware component (114) is ready for software installation, installing the software data from the data center (200) at the at least one hardware component (114).

2. The method in accordance with claim 1, wherein the device comprises a wind energy device and wherein the network parameter (402) is selected from the group consisting of a network load, a grid stability a grid load, a date, a moment in time, a time duration for software download, and any combination thereof, and/or wherein the operation parameter (406) is selected from the group consisting of workload of the at least one hardware component (114), environmental condition at the at least one hardware component (114), grid stability, operational state of the wind energy device (100), and any combination thereof, wherein the detected environmental condition is selected from the group consisting of a wind velocity, a wind direction, an ambient temperature, a humidity level, and any combination thereof, and wherein the operational state of the wind energy device (100) is selected from the group consisting of a defect-downtime, a low energy operation, a repair period, a maintenance interval, an inspection period, and any combination thereof.

3. The method in accordance with claim 1 or 2, wherein the device comprises a wind energy device and wherein the at least one hardware component (114) is provided as a controller of a wind turbine (100), and wherein, at an individual wind turbine (100), the following steps are performed with respect to an installation the software data from the central server unit to the wind turbine controller:
shutting down the wind turbine (100);
installing the software data; and
restarting the wind turbine (100).

4. The method in accordance with any one of the preceding claims, wherein the device comprises a wind energy device and wherein a time slot for an installation of the software data is determined on the basis of a condition selected from the group consisting of a detected environmental condition at a wind turbine (100), a site condition, a grid condition, an operational state of a wind turbine (100), a detected environmental condition at at least one second wind turbine (100) arranged within a wind farm, an operational state of at least one second wind turbine (100) arranged within the wind farm, and any combination thereof.

5. A system adapted for installing software data at at least one hardware component (114) of a device, the system comprising:
a download server (400);
a network parameter detection unit (401) adapted for detecting a network parameter (402) indicative of an operational condition of a network used for a software download from the download server (400);
an operation parameter detection unit (302) adapted for detecting at least one operation parameter (406) indicative of an operational condition of the at least one hardware component (114); and
a determination unit (303) operatively connected to the operation parameter detection unit and adapted for determining, on the basis of the detected operation parameter (406), an appropriate time slot for installing the software at the at least one hardware component (114).

6. The system in accordance with claim 5, wherein the device comprises a wind energy device and wherein the at least one detected operation parameter (406) is selected from the group consisting of a detected environmental condition at the wind energy device, a site condition, a grid condition, an operational state of the wind energy device (100), and any combination thereof.

7. The system in accordance with claim 5 or 6, wherein a time slot for a software update is determined on the basis of at least one operational state of at least one of at least two wind turbines (100).

8. The system in accordance with any one of the claims 5 to 7, wherein the at least one detected operation parameter (406) is selected from the group consisting of a detected environmental condition at at least one of the at least two wind turbines (100), a site condition, a grid condition, an operational state of at least one of the at least two wind turbines (100), and any combination thereof.

9. The system in accordance with claim 8, wherein the detected environmental condition is selected from the group consisting of a wind velocity, a wind direction, an ambient temperature, a humidity level at at least one of the at least two wind turbines (100), and any combination thereof.

10. The system in accordance with any one of the claims 5 to 9, wherein the operation parameter (406) is obtained from at least one of at least two wind turbines (100), and wherein the operation parameter (406) is selected from the group consisting of a defect-downtime, a low energy operation, a repair period, a maintenance interval, an inspection period, and any combination thereof.
